(19) Europäisches Patentamt
European Patent Office
Office européen des brevets

(11) **EP 4 787 805 A1**

(12) **EUROPEAN PATENT APPLICATION**
published in accordance with Art. 153(4) EPC

(43) Date of publication:
**05.08.2026 Bulletin 2026/32**

(21) Application number: **24821739.0**

(22) Date of filing: **09.12.2024**

(51) International Patent Classification (IPC):
*H04L 45/24* (2022.01)    *H04L 47/11* (2022.01)
*H04L 47/27* (2022.01)    *H04L 47/193* (2022.01)

(52) Cooperative Patent Classification (CPC):
**H04L 45/24; H04L 47/11; H04L 47/27;** H04L 47/193

(86) International application number:
**PCT/CN2024/137786**

(87) International publication number:
**WO 2026/123157 (18.06.2026 Gazette 2026/25)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **New H3C Technologies Co., Ltd.**
**Binjiang District**
**Hangzhou**
**Zhejiang 310052 (CN)**

(72) Inventors:
• **CHENG, Zhen**
  **Beijing 100102 (CN)**
• **JIANG, Qin**
  **Beijing 100102 (CN)**

(74) Representative: **IPAZ**
**Parc Les Algorithmes**
**Bâtiment Platon**
**91190 Saint Aubin (FR)**

(54) **CONGESTION CONTROL METHOD AND APPARATUS**

(57) A congestion control method and apparatus, relating to the technical field of communication and applied to a sending-end adaptor in an AI network. The method includes: determining an initial sending window corresponding to each data flow according to a credit assigned to the data flow by a receiving-end adaptor; sending data packets to the receiving-end adaptor using a packet spray manner according to the initial sending window corresponding to each data flow; detecting current congestion information of the AI network; in response to determining that the current congestion information indicates that the AI network is in a first congestion state, adjusting the initial sending window corresponding to each data flow according to the current congestion information to obtain a secondary refreshed sending window corresponding to the data flow, wherein a parameter used to characterize the first congestion state is greater than a first parameter threshold and less than a second parameter threshold; sending the data packets to the receiving-end adaptor using the packet spray manner according to the secondary refreshed sending window corresponding to each data flow. The solution can improve the bandwidth performance of the AI network.

determining an initial sending window corresponding to each data flow according to a credit assigned to the data flow by a receiving-end adaptor — S201

sending data packets included in each data flow to the receiving-end adaptor using a packet spray manner according to the initial sending window corresponding to the data flow — S202

detecting current congestion information of the AI network — S203

in response to determining that the current congestion information indicates that the AI network is in a first congestion state, adjusting the initial sending window corresponding to each data flow according to the current congestion information to obtain a secondary refreshed sending window corresponding to the data flow — S204

sending the data packets included in each data flow to the receiving-end adaptor using the packet spray manner according to the secondary refreshed sending window corresponding to the data flow — S205

Fig. 2

## Description

### Technical Field

The present disclosure relates to the technical field of communication, in particular to a congestion control method and apparatus.

### Background

With the rise of Artificial Intelligence (AI) large models, a large-scale AI training task often requires the support of tens of thousands of adaptors. Therefore, higher performance requirements are put forward for AI networks, including ultra-large scale networking, ultra-large port bandwidth, extreme load balancing, and efficient congestion control.

At present, the packet spray technology can meet the requirement of extreme load balancing in AI networks. However, existing congestion control algorithms are all data flow oriented. In the case of using the packet spray technology for load balancing, in response to determining that congestion occurs in one path, since all data flows go through this path, all data flows are affected by the congestion and the communication rates of all data flows are reduced, with the existing congestion control algorithms being used for congestion control.

### Summary

The purpose of the examples in the present disclosure is to provide a congestion control method and apparatus to improve the bandwidth performance of an AI network. The specific technical solutions are as follows.

In a first aspect, an example in the present disclosure provides a congestion control method applied to a sending-end adaptor in an AI network, including:

determining an initial sending window corresponding to each data flow according to a credit assigned to the data flow by a receiving-end adaptor;

sending data packets included in each data flow to the receiving-end adaptor using a packet spray manner according to the initial sending window corresponding to the data flow;

detecting current congestion information of the AI network;

in response to determining that the current congestion information indicates that the AI network is in a first congestion state, adjusting the initial sending window corresponding to each data flow according to the current congestion information to obtain a secondary refreshed sending window corresponding to the data flow, wherein a parameter used to characterize the first congestion state is greater than a first parameter threshold and less than a second parameter threshold;

sending the data packets included in each data flow to the receiving-end adaptor using the packet spray manner according to the secondary refreshed sending window corresponding to the data flow.

In some examples, the method further includes:

in response to determining that the current congestion information indicates that the AI network is in a second congestion state, adjusting the initial sending window corresponding to each data flow according to a congestion signal sent by the receiving-end adaptor to obtain a tertiary refreshed sending window corresponding to the data flow, wherein a parameter used to characterize the second congestion state is greater than or equal to the second parameter threshold;

sending the data packets included in each data flow to the receiving-end adaptor using the packet spray manner according to the tertiary refreshed sending window corresponding to the data flow.

In some examples, detecting the current congestion information of the AI network, includes:
detecting current congestion information of each path between the sending-end adaptor and the receiving-end adaptor in the AI network.

In some examples, detecting the current congestion information of each path between the sending-end adaptor and the receiving-end adaptor in the AI network, includes:

constructing, according to path information of each path between the sending-end adaptor and the receiving-end adaptor in the AI network, a detecting flow corresponding to the path;

sending a detecting packet included in the detecting flow corresponding to each path to the receiving-end adaptor along the path, to obtain the current congestion information of the path.

In some examples, before constructing the detecting flow corresponding to each path, the method further includes:
receiving path information of each path between the sending-end adaptor and the receiving-end adaptor issued by a controller within the AI network, wherein the controller determines the path information of each path according to a communication relationship among adaptors reported by a communication component.

In some examples, adjusting the initial sending window corresponding to each data flow according to the current congestion information to obtain the secondary refreshed sending window corresponding to the data flow, includes:

determining a congestion degree factor of each path between the sending-end adaptor and the receiving-end adaptor in the AI network according to the current congestion information;

calculating a sum of a product of the congestion degree factor and a path bandwidth of each path and calculating a sum of products for all paths, to obtain a real-time total bandwidth of the AI network;

adjusting the initial sending window corresponding to each data flow according to the real-time total bandwidth to obtain the secondary refreshed sending window corresponding to the data flow.

In some examples, adjusting the initial sending window corresponding to each data flow according to the real-time total bandwidth to obtain the secondary refreshed sending window corresponding to the data flow, includes:

calculating a ratio of the real-time total bandwidth to a static bandwidth to obtain a window coefficient;

calculating a product of the initial sending window corresponding to each data flow and the window coefficient to obtain the secondary refreshed sending window corresponding to the data flow.

In a second aspect, an example in the present disclosure provides a congestion control apparatus applied to a sending-end adaptor in an Artificial Intelligence AI network, including:

an initial sending window determining module, to determine an initial sending window corresponding to each data flow according to a credit assigned to the data flow by a receiving-end adaptor;

a packet spray module, to send data packets included in each data flow to the receiving-end adaptor using a packet spray manner according to the initial sending window corresponding to the data flow;

a congestion information detecting module, to detect current congestion information of the AI network; and

a secondary refreshed sending window determining module, to adjust, in response to determining that the current congestion information indicates that the AI network is in a first congestion state, the initial sending window corresponding to each data flow according to the current congestion information to obtain a secondary refreshed sending window corresponding to the data flow, wherein a parameter used to characterize the first congestion state is greater than a first parameter threshold and less than a second parameter threshold;

the packet spray module is further configured to send the data packets included in each data flow to the receiving-end adaptor using the packet spray manner according to the secondary refreshed sending window corresponding to the data flow.

In some examples, the apparatus further includes:

a tertiary refreshed sending window determining module, to adjust, in response to determining that the current congestion information indicates that the AI network is in a second congestion state, the initial sending window corresponding to each data flow according to a congestion signal sent by the receiving-end adaptor to obtain a tertiary refreshed sending window corresponding to the data flow, wherein a parameter used to characterize the second congestion state is greater than or equal to the second parameter threshold;

wherein the packet spray module is further to send the data packets included in each data flow to the receiving-end adaptor using the packet spray manner according to the tertiary refreshed sending window corresponding to the data flow.

In some examples, the congestion information detecting module is specifically to:
detect current congestion information of each path between the sending-end adaptor and the receiving-end adaptor in the AI network.

In some examples, the congestion information detecting module is specifically to:
construct, according to path information of each path between the sending-end adaptor and the receiving-end adaptor in the AI network, a detecting flow corresponding to the path; send a detecting packet included d in the detecting flow corresponding to each path to the receiving-end adaptor along the path, to obtain the current congestion information of the path.

In some examples, the apparatus further includes:
a path information receiving module, to receive path information of each path between the sending-end adaptor and the receiving-end adaptor issued by a controller within the AI network before the detecting flow corresponding to each path is constructed, wherein the controller determines the path information of each path according to a communication relationship among adaptors reported by a communication component.

In some examples, the secondary refreshed sending window determining module is specifically to:
determine a congestion degree factor of each path between the sending-end adaptor and the receiving-end adaptor in the AI network according to the current congestion information; calculate a sum of a product of the congestion degree factor and a path bandwidth of each path and calculate a sum of products for all paths, to obtain a real-time total bandwidth of the AI network; adjust the initial sending window corresponding to each data flow according to the real-time total bandwidth to obtain the secondary refreshed sending window corresponding to the data flow.

In some examples, the secondary refreshed sending window determining module is specifically to:
calculate a ratio of the real-time total bandwidth to a static bandwidth to obtain a window coefficient; calculate a product of the initial sending window corresponding to each data flow and the window coefficient to obtain the secondary refreshed sending window corresponding to the data flow.

In a third aspect, an example in the present disclosure provides a server including an adaptor and a machine readable storage medium having stored therein machine executable instructions that can be executed by the adaptor, wherein the machine executable instructions cause the adaptor to carry out any of the methods provided in the first aspect.

In a fourth aspect, an example in the present disclosure provides a computer readable storage medium having stored therein a computer program, wherein the computer program, when executed by an adaptor, carries out any of the methods provided in the first aspect.

In a sixth aspect, an example in the present disclosure provides a computer program product containing instructions, which when running on a computer, cause the computer to carry out any of methods provided in the first aspect.

In the technical solution provided by the example of the present disclosure, when the sending-end adaptor communicates with the receiving-end adaptor, the receiving-end adaptor assigns the credit to each data flow, and the sending-end adaptor preferentially determines the initial sending window corresponding to each data flow according to the credit, so as to send data packets. In the process of sending data packets according to the initial sending window determined based on the credit, the sending-end adaptor detects the current congestion information of the AI network; in response to determining that the current congestion information indicates that the AI network is in the first congestion state, and a parameter used to characterize the first congestion state is greater than a first parameter threshold and less than a second parameter threshold, then it is indicated that the AI network is in a slight congestion state, and the sending-end adaptor can achieve a fine-grained adjustment of the initial sending window according to the current congestion information, and achieve the sensitive and precise rate regulation, to avoid the severe degradation of the overall performance of the AI network due to slight congestion, and to improve the bandwidth performance of the AI network.

Of course, it is not necessary for any product or method implementing the present disclosure to achieve all the advantages described above simultaneously.

## Brief Description of the Drawings

The accompanying drawings described here are used to provide a further understanding of the present disclosure and constitute a part of the same. The illustrative examples of the present disclosure and their descriptions are used to explain the present disclosure and do not constitute an improper limitation of the present disclosure.

Fig. 1 is a first schematic networking diagram of an AI network provided by an example of the present disclosure;

Fig. 2 is a first schematic diagram of a congestion control method provided by an example of the present disclosure;

Fig. 3 is a second schematic diagram of a congestion control method provided by an example of the present disclosure;

Fig. 4 is a schematic diagram of taking effect of a congestion control mechanism provided by an example of the present disclosure;

Fig. 5 is a second schematic networking diagram of an AI network provided by an example of the present disclosure;

Fig. 6 is a schematic diagram of forwarding a detecting flow based on the networking shown in Fig. 5.

Fig. 7 is a schematic diagram of a window adjustment process provided by an example of the present disclosure;

Fig. 8 is a third schematic diagram of a congestion control method provided by an example of the present disclosure;

Fig. 9 is a schematic structure diagram of a congestion control apparatus provided by an example of the present disclosure;

Fig. 10 is a schematic structure diagram of a server provided by an example of the present disclosure.

## Detailed Description

In order to make the objective, technical solutions and advantages of the present disclosure clearer and more understandable, the present disclosure will be described in more detail below with reference to the accompanying drawings and examples. Obviously, the described examples are only some, and not all, of the examples of the present disclosure. All other examples obtained based on the examples of the present disclosure by those skilled in the art fall into the scope of protection of the present disclosure.

There are many existing congestion control algorithms, such as Data Center Quantized congestion notification (DCQCN), High Precision Congestion Control (HPCC), etc. These congestion control algorithms all rely on data flow-based load sharing. Taking DCQCN as an example, the congestion control manner is that: a switching device between a source terminal and a destination terminal senses a congestion degree, and randomly marks data flows proportionally with Explicit Congestion Notification (ECN) marks according to the congestion degree; and the destination terminal (such as an adaptor) identifies the ECN marks in the data flows, and generates a corresponding Congestion Notification Packet (CNP) and notifies the CNP to the source terminal (such as an adaptor); the source terminal slows down data flows corresponding to the CNP.

The data flow-based load sharing manner is to perform a hash calculation according to packet information of a data flow, determine a path corresponding to the data flow, and forward the data flow along the path.

The data flow-based load sharing manner cannot achieve absolute load sharing. AI data center is based on AI high performance network (referred to as AI network), which has high requirements for network performance. With the increase of Expert models and the increase of All to All traffic, the flow-based load sharing manner will face more challenges and cannot meet the performance requirements of the AI network. In order to meet the performance requirements of the AI network, the packet spray technology is proposed.

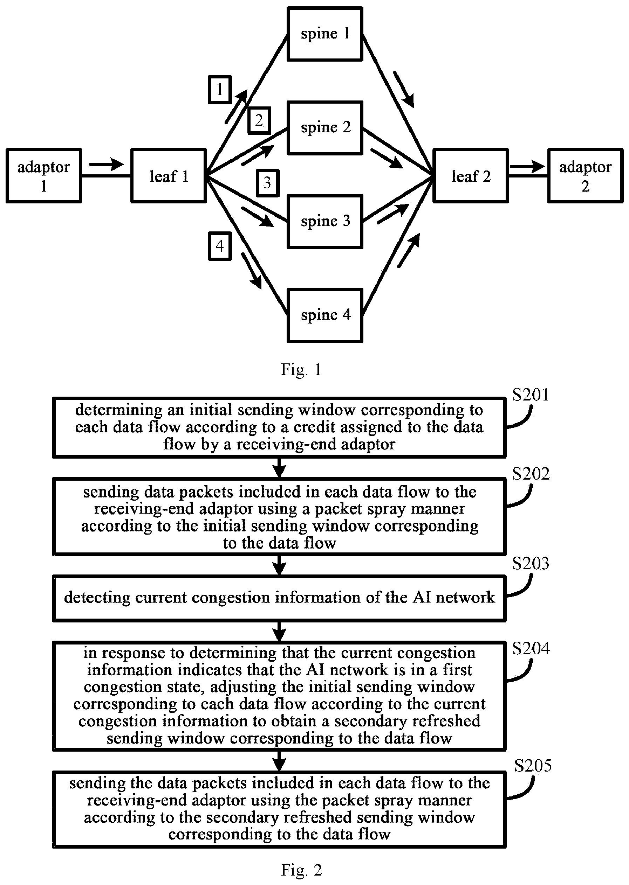

Packet spray technology: a switching device between a source device and a destination device evenly sprays data packets included in a data flow to multiple paths according to load degrees of the paths. This can make full use of a port bandwidth, and the packet out-of-order issue is solved through reordering by the adaptor. A networking as shown in Fig. 1 includes switching devices such as Leaf 1 to Leaf 2 and Spine 1 to Spine 4, and four paths are formed between an adaptor 1 and an adaptor 2 based on the switching devices such as Leaf 1 to Leaf 2 and Spine 1 to Spine 4, namely {Path 1: Leaf 1→ Spine 1→Leaf 2}, {Path 2: Leaf 1→Spine 2→ Leaf 2}, {Path 3: Leaf 1→Spine 3→Leaf 2}, {Path 4: Leaf 1→Spine 4→Leaf 2}. The adaptor 1 sends a data flow to the adaptor 2, and Packet 1 to Packet 4 of the data flow are sprayed onto Path 1 to Path 4. After receiving Packet 1 to Packet 4, the adaptor 2 reorders Packet 1 to Packet 4.

The packet spray technology is a load-sharing manner based on packet by packet, which can meet the extreme load balancing requirement in the AI network and can well adapt to various application scenarios.

However, with the introduction of packet-by-packet load sharing mode, the existing congestion control algorithms will not be available. In the case of still using the existing congestion control algorithms, in response to determining that congestion occurs in a path, all data flows may be marked with the ECN marks by the switching device because all the data flows will go through this path, and then the communication rates of all the data flows will be decreased. This will results in that the overall communication performance in the packet spray mode is degraded more severely than in the data flow-based load sharing mode once congestion occurs in the network.

To solve the above issue, an example of the present disclosure provides a congestion control method, as shown in Fig. 2, which is applied to a sending-end adaptor in an AI network. The method includes:

block S201, determining an initial sending window corresponding to each data flow according to a credit assigned to the data flow by a receiving-end adaptor;
block S202, sending data packets included in each data flow to the receiving-end adaptor using a packet spray manner according to the initial sending window corresponding to the data flow;
block S203, detecting current congestion information of the AI network;
block S204, in response to determining that the current congestion information indicates that the AI network is in a first congestion state, adjusting the initial sending window corresponding to each data flow according to the current congestion information to obtain a secondary refreshed sending window corresponding to the data flow;
block S205, sending the data packets included in each data flow to the receiving-end adaptor using the packet spray manner according to the secondary refreshed sending window corresponding to the data flow.

In the technical solution provided by the example of the present disclosure, in response to determining that the sending-end adaptor communicates with the receiving-end adaptor, the receiving-end adaptor assigns the credit to each data flow, and the sending-end adaptor preferentially determines the initial sending window corresponding to each data flow according to the credit, so as to send data packets. In the process of sending data packets according to the initial sending window determined based on the credit, the sending-end adaptor detects the current congestion information of the AI network; in response to determining that the current congestion information indicates that the AI network is in the first congestion state, and a parameter used to characterize the first congestion state is greater than a first parameter threshold and less than a second parameter threshold, then it is indicated that the AI network is in a slight congestion state, and the sending-end adaptor can achieve a fine-grained adjustment of the initial sending window according to the current congestion information, and achieve the sensitive and precise rate regulation, to avoid the severe degradation of the overall performance of the AI network due to slight congestion, and to improve the bandwidth performance of the AI network.

In an example of the present disclosure, the sending-end adaptor and the receiving-end adaptor can be any one of adaptors in the AI network, the sending-end adaptor is the source terminal and the receiving-end adaptor is the destination terminal.

In the above block S201, in response to determining that the sending-end adaptor needs to send a data flow to the receiving-end adaptor, the sending-end adaptor requests the credit of the data flow from the receiving-end adaptor. The receiving-end adaptor assigns the credit for the data flow with N Maximum Transmission units (MMTU) as a granularity unit. After receiving the credit of the data flow, the sending-end adaptor determines the sending window, i.e., initial sending window, corresponding to the data flow according to the credit, and then performs block S202 of sending the data packets included in the data flow to the receiving-end adaptor using the packet spray manner according to the initial sending window. That is, the switching device between the sending-end adaptor and the receiving-end adaptor evenly sprays the data packets included in the data flow to multiple paths according to the load degrees of the paths, to send the data packets to the receiving-end adaptor with load balancing. Here, there is no need to limit the rate for the first packet.

In an example of the present disclosure, the sending-end adaptor needs to send one or more data flows to the receiving-end adaptor, and for each data flow, the data packets can be sent using the above method.

The sending window corresponding to each data flow is controlled based on the credit to send data packets, which can ensure that, in the All to One scenario (such as Incast scenario), a total bandwidth for sending from multiple parties do not exceed a total bandwidth of a receiver or a network outlet, thus avoiding the congestion caused by the All to One.

In the above block S203, the current congestion information is congestion information of the current AI network, and the congestion information can include but is not limited to: a queue depth of the switching device, a time of receiving a detecting packet, a time of sending the detecting packet, a throughput at an ingress port of the destination terminal and other parameter information.

In the process of sending the data packets to the receiving-end adaptor according to the initial sending window, the sending-end adaptor can detect the current congestion information of the AI network in real time, so as to determine the congestion state of the AI network by using the current congestion information.

For example, the current congestion information includes the queue depth of the switching device. The queue depth greater than a preset depth indicates that congestion occurs. The sending-end adaptor can determine a switching device where congestion occurs, in the AI network by using the current congestion information. Taking the number of switching devices where congestion occurs being the parameter used to characterize the first congestion state as an example, in response to determining that the number of switching devices where congestion occurs is less than or equal to the first number (the first parameter threshold), it is determined that the AI network is in an uncongested state; in response to determining that the number of switching devices where congestion occurs is greater than the first number and less than the second number (the second parameter threshold), it is determined that the AI network is in the first congestion state which represents slight congestion; in response to determining that the number of switching devices where congestion occurs is greater than or equal to the second number, it is determined that the AI network is in the second congestion state which represents severe congestion.

For another example, in response to determining that there is a congested switching device in a path, it indicates that congestion occurs in the path. The sending-end adaptor can determine a path where congestion occurs, in the AI network by using the current congestion information. Taking the number of paths where congestion occurs being the parameter used to characterize the first congestion state as an example, in response to determining that the number of paths where congestion occurs is less than or equal to the first number (the first parameter threshold), it is determined that the AI network is in the uncongested state; in response to determining that the number of paths where congestion occurs is greater than the first number and less than the second number (the second parameter threshold), it is determined that the AI network be in the first congestion state which represents slight congestion; in response to determining that the number of paths where congestion occurs is greater than or equal to the second number, it is determined that the AI network is in the second congestion state which represents severe congestion.

In the example of the present disclosure, the congestion degree of the AI network can also be determined in other ways, which is not limited.

In the above block S204, in response to determining, by the sending-end adaptor, that the AI network is in the first congestion state by using the current congestion information detected in block S203, the sending-end adaptor precisely adjusts the initial sending window corresponding to each data flow according to detailed information included in the current congestion information, wherein the adjusted initial sending window is the secondary refreshed sending window. Then, block S205 is performed, that is, for each data flow, the sending-end adaptor sends the data packets included in the data flow to the receiving-end adaptor using the packet spray manner according to the secondary refreshed sending window corresponding to the data flow.

In response to determining, by the sending-end adaptor, that the AI network is uncongested by using the current congestion information detected in block S203, it is not necessary to adjust the initial sending window, and the sending-end adaptor continues to send the data packets included in each data flow to the receiving-end adaptor using the packet spray manner according to the initial sending window corresponding to the data flow.

In an example of the present disclosure, in a case that the AI network is in the first congestion state, it indicates that slight congestion occurs in the AI network, and the sending-end adaptor precisely adjusts the initial sending window corresponding to each data flow by using the current congestion information, to ensure that the communication traffic between the sending-end adaptor and the receiving-end adaptor does not exceed a real-time total bandwidth, and achieve sensitive and precise fine-grained rate regulation, avoid the congestion in the network and significant performance degradation due to slight congestion.

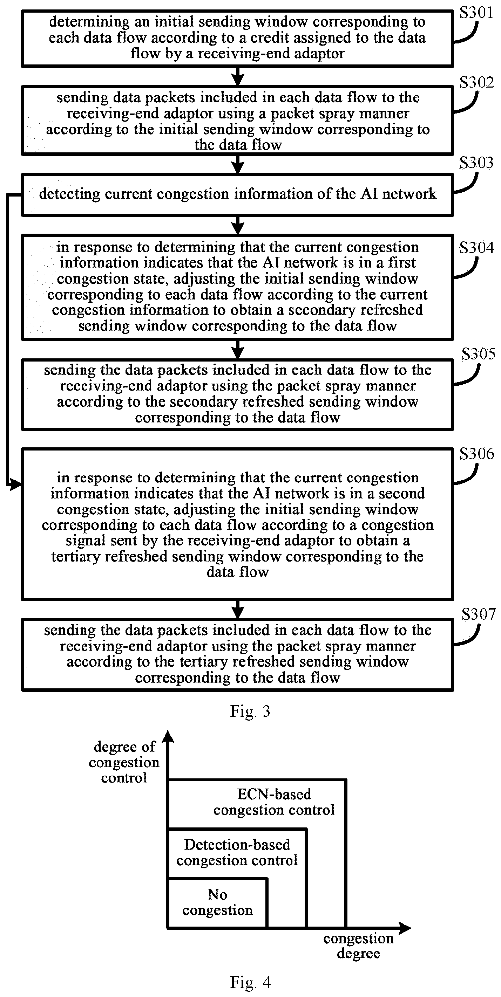

In some examples, to further optimize congestion control, as shown in Fig. 3, it is further provided a congestion control method applied to the sending-end adaptor in the AI network, including:

block S301, determining an initial sending window corresponding to each data flow according to a credit assigned to the data flow by a receiving-end adaptor;

block S302, sending data packets included in each data flow to the receiving-end adaptor using a packet spray manner according to the initial sending window corresponding to the data flow;

block S303, detecting current congestion information of the AI network;

block S304, in response to determining that the current congestion information indicates that the AI network is in a first congestion state, adjusting the initial sending window corresponding to each data flow according to the current congestion information to obtain a secondary refreshed sending window corresponding to the data flow;

block S305, sending the data packets included in each data flow to the receiving-end adaptor using the packet spray manner according to the secondary refreshed sending window corresponding to the data flow;

the above blocks S301 to S305 are the same as the above blocks S201 to S205 and will not be described again here.

block S306, in response to determining that the current congestion information indicates that the AI network is in a second congestion state, adjusting the initial sending window corresponding to each data flow according to a congestion signal sent by the receiving-end adaptor to obtain a tertiary refreshed sending window corresponding to the data flow, wherein a parameter used to characterize the second congestion state is greater than or equal to the second parameter threshold;

block S307, sending the data packets included in each data flow to the receiving-end adaptor using the packet spray manner according to the tertiary refreshed sending window corresponding to the data flow.

In an example of the present disclosure, a switching device in the AI network can support existing congestion control algorithms such as DCQCN, HPCC, etc. The congestion signal varies among different congestion control algorithms. Taking DCQCN as an example, in response to determining that the queue depth on the switching device exceeds the preset depth, the switching device can mark the data packets in the queue with ECN marks, and the receiving-end adaptor sends the CNP to the sending-end adaptor after receiving the data packets with the ECN marks, wherein the CNP is the congestion signal. In other congestion control algorithms, the receiving-end adaptor can also generate a corresponding congestion signal and feed the congestion signal back to the sending-end adaptor. No more examples will be given here.

After receiving the congestion signal, the sending-end adaptor sends the data packets using the above blocks S301-S305 in response to determining that the current congestion information indicates that the AI network is in the uncongested state or the first congested state. In response to determining that the current congestion information indicates that the AI network is in the second congestion state, it means that the AI network is in the state of severe congestion, and the sending-end adaptor can adjust the initial sending window corresponding to the data flow corresponding to the congestion signal by using the existing congestion algorithm according to the congestion signal sent by the receiving-end adaptor, wherein the adjusted initial sending window is the tertiary refreshed sending window corresponding to the data flow. After that, the sending-end adaptor performs the block S307, that is, for each data flow, the sending-end network interface sends the data packets included in the data flow to the receiving-end adaptor using the packet spray manner according to the tertiary refreshed sending window corresponding to the data flow.

In an example of the present disclosure, in response to determining that severe congestion occurs in the AI network, for example, congestion occurs in multiple paths at the same time, resulting in a significant decrease in the overall available bandwidth, then the sending-end adaptor performs coarse-grained congestion control by using the congestion signal at this time, to significantly reduce the packet rate while slowly increasing the rate, so as to quickly alleviate the network congestion and further optimize the network congestion control.

In an example of the present disclosure, taking the congestion control with the congestion signal being an ECN-based congestion control as an example, the ECN-based congestion control (such as blocks S306-S307 above) takes effect later than the detection-based congestion control (such as blocks S204-S205 above). As shown in Fig. 4, the degree of ECN-based congestion control is greater than that of the detection-based congestion control, and the congestion degree corresponding to ECN-based congestion control is greater than that corresponding to the detection-based congestion control.

In some examples, the above block S203 can be as follows: detecting current congestion information of each path between the sending-end adaptor and the receiving-end adaptor in the AI network. For example, as shown in Fig. 1, the adaptor 1 can detect current congestion information of the four paths between the adaptor 1 and the adaptor 2 with the path as a unit.

In an example of the present disclosure, the sending-end adaptor may detect the current congestion information of each path between the sending-end adaptor and the receiving-end adaptor by using any one of the following methods.

Method 1, constructing, according to path information of each path between the sending-end adaptor and the receiving-end adaptor in the AI network, a detecting flow corresponding to the path; sending a detecting packet included in the detecting flow corresponding to each path to the receiving-end adaptor along the path, to obtain the current congestion information of the path.

The path information can include not limited to a path entropy value, the number of paths between the sending-end adaptor and the receiving-end adaptor, etc. The detecting flow can be an Inband Network Telemetry (INT) flow, and the detecting packet can be an INT packet. The path entropy value is a variable value used to distinguish different paths, which is to be filled in response to determining that the sending-end adaptor sends packets. The specific field where the path entropy value is filled is determined by the cooperation between the sending-end adaptor and the switching device. The number of paths is the number of end-to-end paths used in the packet spray, and the number of paths for the packet spray is determined by a controller in combination with the networking topology of the switching device.

The sending-end adaptor constructs the detecting flow corresponding to each path according to the path information of the path, and one detecting flow is forwarded along one path, to perform congestion detection of all paths. The detecting packet included in the detecting flow carries the path entropy value. After receiving the detecting packet, the switching device can record the queue depth and other congestion information of the switching device in the detecting packet, and the switching device can perform hash forwarding of the detecting packet according to the path entropy value carried in the detecting packet, to enable the detecting packet to be forwarded along the specified path, and further achieve the detection of the specified path.

After receiving the detecting packet, the receiving-end adaptor can report the detecting packet to the controller, and the controller sends the congestion information carried in the detecting packet to the sending-end adaptor; or after receiving the detecting packet, the receiving-end adaptor can send the detecting packet to the sending-end adaptor along the original path, thus achieving the detection of the specified path.

In some examples, in order to acquire the current congestion information, before constructing the detecting flow corresponding to each path, the sending-end adaptor can receive the path information of each path between the sending-end adaptor and the receiving-end adaptor issued by the controller within the AI network, wherein the controller determines the path information of each path according to the communication relationship among adaptors reported by a communication component. The communication component is a software component used to manage the communication among the various adaptors. The communication component can be implemented based on a collective communication library.

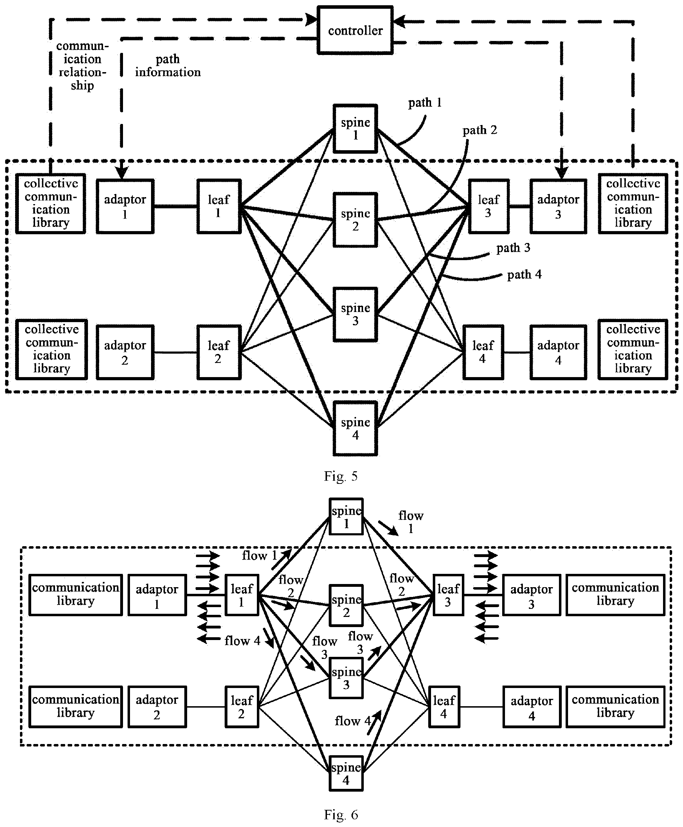

For example, the networking shown in Fig. 5 includes an adaptor 1 to an adaptor 4, Leaf 1 to Leaf 4, and Spine 1 to Spine 4. The adaptor 1 to the adaptor 4 can be located on the same server or on different servers. The networking shown in Fig. 5 further includes the communication component, which is located on the server where the adaptor 1 to the adaptor 4 are located. In the dashed rectangular block, the adaptor 1 needs to communicate with the adaptor 3 and the adaptor 2 needs to communicate with the adaptor 3. The communication component can create a communication group that indicates that the adaptor 1 communicates with the adaptor 3 and the adaptor 2 communicates with the adaptor 4. The communication component synchronizes the communication relationship within the communication group to the controller. The controller determines e communication paths of all data flows through path choreography and issues the path information of communication paths corresponding to each adaptor to the adaptor. Taking the adaptor 1 serving as the sending-end adaptor and the adaptor 3 serving as the receiving-end adaptor in the communication relationship between the adaptor 1 and the adaptor 3 as an example, the controller determines Path 1 to Path 4 in Fig. 5 through path choreography and issues the path information of Path 1 to Path 4 to the adaptor 1. The adaptor 1 obtains the path information for communication between the adaptor 1 itself and the counterpart adaptor 3 through the controller, and the path information includes the number of paths and the path entropy value.

After obtaining the path information, the adaptor 1 creates one detecting flow for each path, such as Flow 1 to Flow 4 as shown in Fig. 6, and each detecting flow passes through one path. Each switching device within the AI network (such as Leaf 1 to Leaf 4 and Spine 1 to Spine 4) identifies a detecting flow and forwards the detecting flow along a path corresponding to the detecting flow using flow hash instead of the packet spray manner. In this way, the adaptor 1 can obtain the congestion information of Path 1 to Path 4.

In an example of the present disclosure, in detecting the congestion information by using the detecting flow, the following points should be noted: the detecting flow and the data flow (such as RDMA flow) use the same queue; the detecting flow adopts a customized Ethernet (eth) packet, and the format of the eth packet is as short as possible to reduce the impact on the data flow; the switching device is responsible for identifying the detecting flow and performing hash forwarding of such packet; the detection precision at microsecond ($\mu$s) level is adopted to ensure the detection precision and response precision, and at the same time, it is necessary to maintain a balance between bandwidth occupancy and rate regulation efficiency, and the bandwidth occupancy should be controlled below one ten-thousandth as far as possible.

In an example of the present disclosure, the optimized congestion control in the packet spray scenario is achieved by "credit based mechanism" + "using INT detection for fine rate regulation in case of slight congestion (i.e., path detection mechanism)" + "using ECN mark for rate regulation of rate reduction in case of severe congestion (optimized congestion control mechanism)", which improves the network bandwidth performance in the AI scenario.

Method 2, each switching device in the AI network periodically or event-triggeredly reports its own congestion information to the controller; the controller determines switching devices on each path between the sending-end adaptor and the receiving-end adaptor according to the AI network topology, and then determines, according to congestion information of the switching devices on each path between the sending-end adaptor and the receiving-end adaptor, the current congestion information of the path, and sends the current congestion information to the sending-end adaptor.

The sending-end adaptor can also detect the current congestion information of each path in other ways, which is not limited.

In an example of the present disclosure, the sending-end adaptor can obtain the current congestion information of the AI network by means of path detecting, or can obtain the current congestion information of the AI network by other means, such as by detecting the throughput at the ingress port of the destination device, etc., which is not limited.

In some examples, in the above block S204, adjusting the initial sending window corresponding to each data flow according to the current congestion information to obtain the secondary refreshed sending window corresponding to the data flow can be: determining a congestion degree factor of each path between the sending-end adaptor and the receiving-end adaptor in the AI network according to the current congestion information; determining a real-time total window size of the AI network according to the congestion degree factor, a path bandwidth and a path round-trip time of each path; adjusting the initial sending window corresponding to each data flow according to the real-time total window size to obtain the secondary refreshed sending window corresponding to the data flow.

In an example of the present disclosure, the sending-end adaptor can obtain information such as a congestion degree, the number of congestion hops, Round-Trip Time (RTT), queue depth, etc. of each path according to the current congestion information. With these parameters, the sending-end adaptor can calculate the congestion degree factor of each path comprehensively. For example, the sending-end adaptor can preset a corresponding relationship between a congestion degree factor and congestion information, and the sending-end adaptor determines the congestion degree factor corresponding to congestion information of each path according to the preset corresponding relationship between the congestion degree factor and the congestion information; or, the sending-end adaptor can preset a strategy for determining the congestion degree factor therein, and use the strategy to process the congestion information of each path to obtain the congestion degree factor of each path. The strategy for determining the congestion degree factor can be set according to the actual demand. For example, the strategy for determining the congestion degree factor can be: outputting the congestion information of each path; receiving the congestion degree factor of each path input by the user according to the congestion information of the path; or, the strategy for determining the congestion degree factor can be: calculating the queue depths and values of switching devices on each path, and normalizing the queue depths and values to obtain the congestion degree factor of each path. The strategy for determining the congestion degree factor can also take other forms, which is not limited.

In an example of the present disclosure, in response to determining that there are N paths between the sending-end adaptor and the receiving-end adaptor, the sending-end adaptor obtains a set of congestion degree factors [$a_1$, $a_2$, $a_3$, ..., $a_N$]. The larger the congestion degree factor of a path is, the more serve the congestion in the path is.

In the case of obtaining the congestion degree factor of each path, the sending-end adaptor can calculate a sum of a product of the congestion degree factor and a path bandwidth of each path and calculate a sum of products for all paths, to obtain the real-time total bandwidth of the AI network; and then adjust the initial sending window corresponding to each data flow according to the real-time total bandwidth to obtain the secondary refreshed sending window corresponding to the data flow.

In an example of the present disclosure, the sending-end adaptor can obtain the secondary refreshed sending window by adopting the following methods:

Method 1: the sending-end adaptor configures a static bandwidth; calculates a ratio of the real-time total bandwidth to the static bandwidth to obtain a window coefficient after obtaining the real-time total bandwidth of the AI network; calculates a product of the initial sending window corresponding to each data flow and the window coefficient to obtain the secondary refreshed sending window corresponding to the data flow.

For example, the sending-end adaptor obtains the congestion degree factor and path bandwidth of each path based on the current congestion information of the AI network. In the case of obtaining the congestion degree factor and path bandwidth of each path, the sending-end adaptor can obtain the real-time total bandwidth of the AI network by the following formula (1), and obtain the secondary refreshed sending window corresponding to each data flow by the following formula (2) to formula (3).

$$real\_bd = a_1 \times BW_1 + a_2 \times BW_2 + ... + a_N \times BW_N \; ; \qquad (1)$$

$$X = real\_bd / Sta\_bd \; ; \qquad (2)$$

$$Flow\_wind_j = Credit\_Wind_j \times X \; ; \qquad (3)$$

Wherein, real_bd represents the real-time total bandwidth, $a_i$ represents the congestion degree factor of Path i, and $BW_i$ represents the bandwidth of Path i; X is the window coefficient, Sta_bd is the static bandwidth, Flow_wind$_j$ is the secondary refreshed sending window corresponding to Data Flow j, Credit_Wind$_j$ is the initial sending window corresponding to Data Flow j; i= 1, 2,... N, and N represents the number of paths between the sending-end adaptor and the receiving-end adaptor; j= 1, 2,..., M, and M represents the number of data flows.

Method 2, the sending-end adaptor configures a static bandwidth; can further calculate an average value of the round-trip time of all paths to obtain an average round-trip time while obtaining the real-time total bandwidth of the AI network; calculates a product of the real-time total bandwidth, the average round-trip time and a preset coefficient to obtain the real-time total window size of the AI network; adjusts the initial sending window corresponding to each data flow according to the real-time total window size. Here, the sending-end adaptor can adjust the initial sending window arbitrarily, as long as the sum of sizes of the adjusted initial sending windows is ensured to be less than or equal the real-time total window size. The sending-end adaptor can also adjust the initial sending window by the Method 1, i.e. by calculating the ratio of the real-time total bandwidth to the static bandwidth to obtain the window coefficient; calculating the product of the initial sending window corresponding to each data flow and the window coefficient to obtain the secondary refreshed sending window corresponding to the data flow, which is not limited.

In an example of the present disclosure, in the case of obtaining the congestion degree factor, the path bandwidth and the path round-trip time of each path, the sending-end adaptor can obtain the total window size of the AI network by the formula (1), formula (4) and formula (5).

$$RTT_{agv} = (RTT_1 + RTT_2 + \ldots + RTT_N)/N \quad ; \qquad (4)$$

$$real\_tatol\_window = real\_bd \times RTT_{agv} \times P \qquad . \qquad (5)$$

Wherein, real_bd represents the real-time total bandwidth; $RTT_{agv}$ represents the average round-trip time, $RTT_i$ represents the round-trip time of Path i, real_tatol_window represents the real-time total window size of the AI network, P is an empirical coefficient (that is, the preset coefficient), i= 1, 2,..., N, and N represents the number of paths between the sending-end adaptor and the receiving-end adaptor.

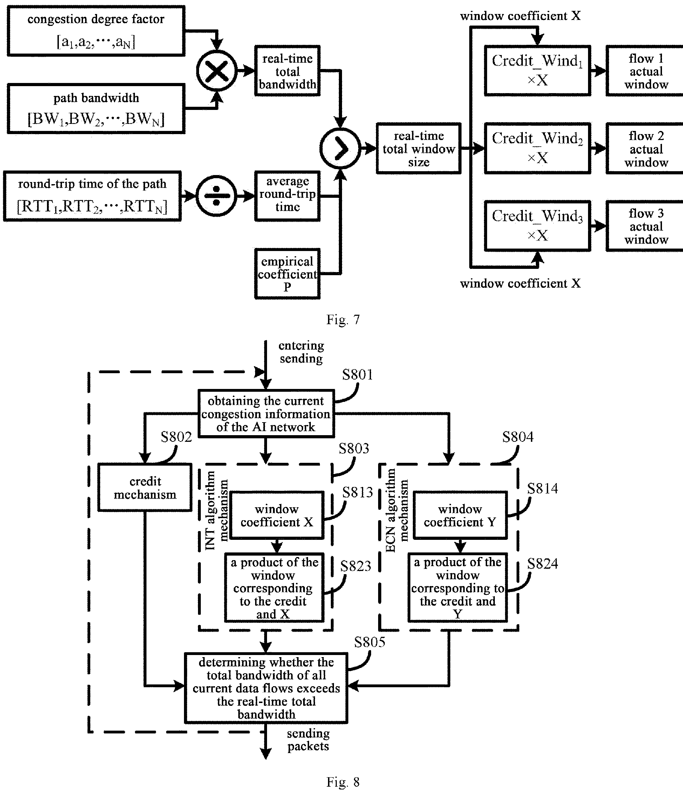

The sending-end adaptor adjusts the initial sending window corresponding to each data flow according to the real-time total window size, to obtain the secondary refreshed sending window corresponding to the data flow. The sum of sizes of all secondary refreshed sending windows is less than or equal to the real-time total window size, that is, SUM (Credit_Wind$_1$, Credit_Wind$_2$, ..., Credit_Wind$_M$) <= real_tatol_window , wherein, Credit_Wind$_j$ represents the sending window size corresponding to the credit of Data Flow j, j= 1, 2,... , M, and M represents the number of data flows between the sending-end adaptor and the receiving-end adaptor. The specific adjustment process can be seen in Fig. 7. The window coefficient X in Fig. 7 can be determined according to the percentage-ratio of the real-time total bandwidth to the static bandwidth to ensure that all traffic within the communication group does not exceed the real-time total bandwidth and that the sum of sizes of all secondary refreshed sending windows is less than or equal to the real-time total window size. In Fig. 7, only taking Data Flow 1 to Data Flow 3 as an example, the product of Credit_Wind$_i$ and window coefficient X is used as the actual window obtained after adjustment, i.e., the secondary refreshed sending window.

In an example of the present disclosure, in the above block S204, adjusting the initial sending window corresponding to each data flow according to the current congestion information to obtain the secondary refreshed sending window corresponding to the data flow can also be implemented in other ways, for example, by determining a percentage change in a congestion degree determined by the current congestion information to a congestion degree determined by previous congestion information; adjusting the initial sending window corresponding to each data flow according to the percentage change, to obtain the secondary refreshed sending window. A percentage change in the secondary refreshed sending window to the initial sending window is the same as the percentage change in the congestion degree, and the percentage change in the congestion degree is a percentage change in a congestion degree indicated by the current congestion information to a congestion degree indicated by the previous congestion information.

The congestion control method provided in the example of the present disclosure is described in detail below in combination with the congestion control process shown in Fig. 8. When the sending-end adaptor needs to send a data flow, the following blocks are performed:

block S801, obtaining current congestion information of the AI network. In response to determining that the current congestion information indicates that the AI network is uncongested, then block S802 is preformed; in response to determining that the current congestion information indicates that slight congestion occurs in the AI network, then the block S803 is performed; in response to determining that the current congestion information indicates that serve congestion occurs in the AI network, the block S804 is performed. Slight congestion in the AI network represents that the AI network is in the first congestion state, and severe congestion in the AI network indicates that the AI network is in the second congestion state.

block S802, sending packets by using a credit mechanism, that is, setting the initial sending window corresponding to each data flow to a sending window corresponding to credit.

block S803, sending packets by using an INT algorithm mechanism, that is, adjusting the sending window by using an INT algorithm, specifically including: block S813, determining the window coefficient X according to the congestion information; block S823, calculating a product of the sending window corresponding to the credit and the window coefficient X to obtain the secondary refreshed sending window.

block S804, sending packets by using an ECN algorithm mechanism, that is, adjusting the sending window by using an ECN algorithm, specifically including: block S814, determining the window coefficient Y according to a CNP density; block S824, calculating a product of the sending window corresponding to the credit and the window coefficient Y to obtain the tertiary refreshed sending window, wherein, the larger the CNP density is, the lower the window coefficient Y is. Here, DCQCN is only taken as an example, and does not constitute a limit.

block S805, determining whether the total bandwidth of all current data flows exceeds the real-time total bandwidth; if the total bandwidth of all current data flows exceeds the real-time total bandwidth, re-performing the block S801; if the total bandwidth of all current data flows does not exceed the real-time total bandwidth , sending the packets according to the adjusted window.

In an example of the present disclosure, in the case that the total bandwidth of all current data flows exceeds the real-time total bandwidth, the sending-end adaptor may re-perform the block S80 to cause the adjusted total bandwidth of all current data flows does not exceed the real-time total bandwidth , and then sends packets, to reduce network congestion; or, the sending-end adaptor can directly send the packets and re-perform block S801 at the same time to reduce the impact on the network; the sending-end adaptor can also discard the currently cached packets to reduce the network congestion. The sending-end adaptor can perform processing according to the specific configuration strategy, which is not limited.

The above three window adjustment mechanisms ensure that the total bandwidth of all current data flows does not exceed the real-time total bandwidth.

The congestion control method provided in the example of the present disclosure is a congestion control method based on global traffic rate regulation using multi-path matching (Spray) load sharing mode (i.e., packet spray mode), that is, adjusting the window and the packet transmission rate according to the overall congestion information of the AI network.

In addition, the congestion control method provided by the example of the present disclosure adopts different mechanisms to adjust the rate according to the different congestion degrees, wherein the mechanisms are specifically divided into a coarse-grained mechanism (such as ECN-based congestion control) and a fine-grained mechanism (such as detection-based congestion control). The fine-grained mechanism is suitable for maintaining bandwidth as much as possible in case of slight congestion. The coarse-grained mechanism is suitable for quickly alleviating in severe congestion/failure scenarios.

By integrating different algorithms to respectively control the cases of a terminal N:1 congestion model, a micro-burst congestion model for a transmission network, and a persistent congestion model caused by partial interruption of a transmission network, etc., to achieve the congestion control method with a goal of optimal total control, fastest fault recovery, and least overall congestion.

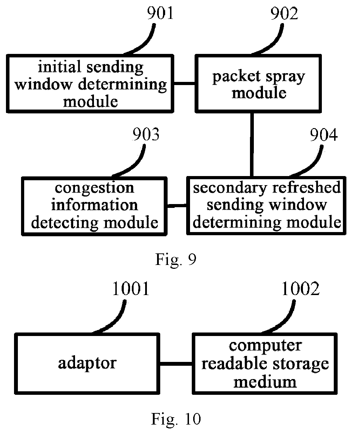

Corresponding to the above congestion control method, an example of the present disclosure further provides a congestion control apparatus, as shown in Fig. 9, applied to a sending-end adaptor in an AI network, including:

an initial sending window determining module 901, to determine an initial sending window corresponding to each data flow according to a credit assigned to the data flow by a receiving-end adaptor;

a packet spray module 902, to send data packets included in each data flow to the receiving-end adaptor using a packet spray manner according to the initial sending window corresponding to the data flow;

a congestion information detecting module 903, to detect current congestion information of the AI network; and

a secondary refreshed sending window determining module 904, to adjust, in response to determining that the current congestion information indicates that the AI network is in a first congestion state, the initial sending window corresponding to each data flow according to the current congestion information to obtain a secondary refreshed sending window corresponding to the data flow, wherein a parameter used to characterize the first congestion state is greater than a first parameter threshold and less than a second parameter threshold;

the packet spray module 902 is further configured to send the data packets included in each data flow to the receiving-end adaptor using the packet spray manner according to the secondary refreshed sending window corresponding to the data flow.

In some examples, the above congestion control apparatus can further include:

a tertiary refreshed sending window determining module, to adjust, in response to determining that the current congestion information indicates that the AI network is in a second congestion state, the initial sending window corresponding to each data flow according to a congestion signal sent by the receiving-end adaptor to obtain a tertiary refreshed sending window corresponding to the data flow, wherein a parameter used to characterize the second congestion state is greater than or equal to the second parameter threshold;

wherein the packet spray module 902 is further to send the data packets included in each data flow to the receiving-end adaptor using the packet spray manner according to the tertiary refreshed sending window corresponding to the data flow.

In some examples, the congestion information detecting module 903 is specifically to:
detect current congestion information of each path between the sending-end adaptor and the receiving-end adaptor in the AI network.

In some examples, the congestion information detecting module 903 is specifically to:

construct, according to path information of each path between the sending-end adaptor and the receiving-end adaptor in the AI network, a detecting flow corresponding to the path;

send a detecting packet included in the detecting flow corresponding to each path to the receiving-end adaptor along the path, to obtain the current congestion information of the path.

In some examples, the above congestion control apparatus can further include:
a path information receiving module, to receive path information of each path between the sending-end adaptor and the receiving-end adaptor issued by a controller within the AI network before the detecting flow corresponding to each path is constructed, wherein the controller determines the path information of each path according to a communication relationship among adaptors reported by a communication component.

In some examples, the secondary refreshed sending window determining module 904 is specifically to: determine a congestion degree factor of each path between the sending-end adaptor and the receiving-end adaptor in the AI network according to the current congestion information; calculate a sum of a product of the congestion degree factor and a path bandwidth of each path and calculate a sum of products for all paths, to obtain a real-time total bandwidth of the AI network; adjust the initial sending window corresponding to each data flow according to the real-time total bandwidth to obtain the secondary refreshed sending window corresponding to the data flow.

In some examples, the secondary refreshed sending window determining module 904 is specifically to: calculate a ratio of the real-time total bandwidth to a static bandwidth to obtain a window coefficient; calculate a product of the initial sending window corresponding to each data flow and the window coefficient to obtain the secondary refreshed sending window corresponding to the data flow.

In the technical solution provided by the example of the present disclosure, when the sending-end adaptor communicates with the receiving-end adaptor, the receiving-end adaptor assigns the credit to each data flow, and the sending-end adaptor preferentially determines the initial sending window corresponding to each data flow according to the credit, so as to send data packets. In the process of sending data packets according to the initial sending window determined based on the credit, the sending-end adaptor detects the current congestion information of the AI network; in response to determining that the current congestion information indicates that the AI network is in the first congestion state, and a parameter used to characterize the first congestion state is greater than a first parameter threshold and less than a second parameter threshold, then it is indicated that the AI network is in a slight congestion state, and the sending-end adaptor can achieve a fine-grained adjustment of the initial sending window according to the current congestion information, and achieve the sensitive and precise rate regulation, to avoid the severe degradation of the overall performance of the AI network due to slight congestion, and to improve the bandwidth performance of the AI network.

Corresponding to the above congestion control method, an example of the present disclosure further provides a server, as shown in Fig. 10, including one or more adaptors 1001 and a machine readable storage medium 1002 having stored therein machine executable instructions which can be executed by the adaptors 1001, wherein the machine executable instructions cause the adaptors 1001 to carry out any one of the congestion control methods described above.

The machine readable storage medium may include a Random Access Memory (RAM) or Non-Volatile Memory (NVM), such as at least one disk memory. Optionally, the machine readable storage medium may also be at least one storage located away from the aforementioned adaptors.

In a further example provided in the present disclosure, it is further provided a computer readable storage medium having stored therein a computer program, wherein the computer program, when executed by the adaptor, carries out any of the above congestion control methods.

In a further example provided in the present disclosure, it is further provided a computer program product containing instructions, which, when running on a computer, cause the computer to carry out any of congestion control methods in the above examples.

In the above examples, it may be implemented in whole or in part by software, hardware, firmware or any combination thereof. When implemented in software, it can be implemented in whole or in part in the form of a computer program product. The computer program product includes one or more computer instructions. When the computer program instructions are loaded and executed on a computer, the processes or functions described in the examples of the present disclosure are generated in whole or in part. The computer may be a general purpose computer, special purpose computer, computer network, or other programmable device. The computer instructions may be stored in a computer readable storage medium or transmitted from one computer readable storage medium to another computer readable storage medium, for example, the computer instructions may be transmitted from a website, computer, server or data center to another website, computer, server, or data center by wire (such as coaxial cable, fiber optic, digital subscriber line (DSL)) or wirelessly (such as infrared, wireless, microwave, etc.). The computer-readable storage medium may be any available medium that can be accessed by a computer or a data storage device such as a server and a data center and the like that includes an integration of one or more available medium. The available medium may be magnetic media (such as a floppy disk, a hard disk, a magnetic tape), optical media (such as DVD) or semiconductor media (such as Solid State Disk (SSD)) and the like.

It should be noted that in this article, relational terms such as first and second are only to distinguish one entity or operation from another, and do not necessarily require or imply any actual relationship or order between these entities or operations. Moreover, the terms "include", "contain", or any other variation thereof are intended to encompass a non-exclusive inclusion, such that a process, method, article, or device that includes a series of elements not only includes those elements, but also other elements that are not explicitly listed, or also include elements inherent in such a process, method, article, or device. Without further limitations, the elements limited by the statement "including one..." do not exclude the existence of other identical elements in the process, method, article, or device that includes the elements.

The various examples in this specification are described in a relevant manner, and the same and similar parts between the various examples can be referred to each other, and each example focuses on the differences from other examples. In particular, for the examples of the apparatus, server, storage medium and program product, since the examples are basically similar to the examples of the method, the description is relatively simple, and the relevant points can be referred to the partial description of the examples of the method.

The above are only better examples of the present disclosure and are not used to limit the present disclosure. Any modification, equivalent replacement, improvement, etc. made within the spirit and principle of the present disclosure shall be included in the scope of protection of the present disclosure.

**Claims**

1. A congestion control method applied to a sending-end adaptor in an Artificial Intelligence AI network, comprising:

   determining an initial sending window corresponding to each data flow according to a credit assigned to the data flow by a receiving-end adaptor;
   sending data packets comprised in each data flow to the receiving-end adaptor using a packet spray manner according to the initial sending window corresponding to the data flow;
   detecting current congestion information of the AI network;
   in response to determining that the current congestion information indicates that the AI network is in a first congestion state, adjusting the initial sending window corresponding to each data flow according to the current congestion information to obtain a secondary refreshed sending window corresponding to the data flow, wherein a parameter used to characterize the first congestion state is greater than a first parameter threshold and less than a second parameter threshold;
   sending the data packets comprised in each data flow to the receiving-end adaptor using the packet spray manner according to the secondary refreshed sending window corresponding to the data flow.

2. The method according to claim 1, wherein, the method further comprises:

   in response to determining that the current congestion information indicates that the AI network is in a second congestion state, adjusting the initial sending window corresponding to each data flow according to a congestion signal sent by the receiving-end adaptor to obtain a tertiary refreshed sending window corresponding to the data flow, wherein a parameter used to characterize the second congestion state is greater than or equal to the second parameter threshold;
   sending the data packets comprised in each data flow to the receiving-end adaptor using the packet spray manner according to the tertiary refreshed sending window corresponding to the data flow.

3. The method according to claim 1, wherein, detecting the current congestion information of the AI network, comprises:
   detecting current congestion information of each path between the sending-end adaptor and the receiving-end adaptor in the AI network.

4. The method according to claim 3, wherein, detecting the current congestion information of each path between the sending-end adaptor and the receiving-end adaptor in the AI network, comprises:

   constructing, according to path information of each path between the sending-end adaptor and the receiving-end adaptor in the AI network, a detecting flow corresponding to the path;
   sending a detecting packet comprised in the detecting flow corresponding to each path to the receiving-end adaptor along the path, to obtain the current congestion information of the path.

5. The method according to claim 3, wherein, before constructing the detecting flow corresponding to each path, the method further comprises:
receiving path information of each path between the sending-end adaptor and the receiving-end adaptor issued by a controller within the AI network, wherein the controller determines the path information of each path according to a communication relationship among adaptors reported by a communication component.

6. The method according to claim 1, wherein, adjusting the initial sending window corresponding to each data flow according to the current congestion information to obtain the secondary refreshed sending window corresponding to the data flow, comprises:

   determining a congestion degree factor of each path between the sending-end adaptor and the receiving-end adaptor in the AI network according to the current congestion information;
   calculating a sum of a product of the congestion degree factor and a path bandwidth of each path and calculating a sum of products for all paths, to obtain a real-time total bandwidth of the AI network;
   adjusting the initial sending window corresponding to each data flow according to the real-time total bandwidth to obtain the secondary refreshed sending window corresponding to the data flow.

7. The method according to claim 6, wherein, adjusting the initial sending window corresponding to each data flow according to the real-time total bandwidth to obtain the secondary refreshed sending window corresponding to the data flow, comprises:

   calculating a ratio of the real-time total bandwidth to a static bandwidth to obtain a window coefficient;
   calculating a product of the initial sending window corresponding to each data flow and the window coefficient to obtain the secondary refreshed sending window corresponding to the data flow.

8. A congestion control apparatus applied to a sending-end adaptor in an Artificial Intelligence AI network, comprising:

   an initial sending window determining module, to determine an initial sending window corresponding to each data flow according to a credit assigned to the data flow by a receiving-end adaptor;
   a packet spray module, to send data packets comprised in each data flow to the receiving-end adaptor using a packet spray manner according to the initial sending window corresponding to the data flow;
   a congestion information detecting module, to detect current congestion information of the AI network; and
   a secondary refreshed sending window determining module, to adjust, in response to determining that the current congestion information indicates that the AI network is in a first congestion state, the initial sending window corresponding to each data flow according to the current congestion information to obtain a secondary refreshed sending window corresponding to the data flow, wherein a parameter used to characterize the first congestion state is greater than a first parameter threshold and less than a second parameter threshold;
   the packet spray module is further configured to send the data packets comprised in each data flow to the receiving-end adaptor using the packet spray manner according to the secondary refreshed sending window corresponding to the data flow.

9. The apparatus according to claim 8, wherein, the apparatus further comprises:

   a tertiary refreshed sending window determining module, to adjust, in response to determining that the current congestion information indicates that the AI network is in a second congestion state, the initial sending window corresponding to each data flow according to a congestion signal sent by the receiving-end adaptor to obtain a tertiary refreshed sending window corresponding to the data flow, wherein a parameter used to characterize the second congestion state is greater than or equal to the second parameter threshold;
   wherein the packet spray module is further to send the data packets comprised in each data flow to the receiving-end adaptor using the packet spray manner according to the tertiary refreshed sending window corresponding to the data flow.

10. The apparatus according to claim 8, wherein, the congestion information detecting module is specifically to:
    detect current congestion information of each path between the sending-end adaptor and the receiving-end adaptor in the AI network.

11. The apparatus according to claim 10, wherein, the congestion information detecting module is specifically to:
    construct, according to path information of each path between the sending-end adaptor and the receiving-end adaptor in the AI network, a detecting flow corresponding to the path; send a detecting packet comprised in the detecting flow corresponding to each path to the receiving-end adaptor along the path, to obtain the current congestion information of the path.

12. The apparatus according to claim 10, wherein, the apparatus further comprises:
a path information receiving module, to receive path information of each path between the sending-end adaptor and the receiving-end adaptor issued by a controller within the AI network before the detecting flow corresponding to each path is constructed, wherein the controller determines the path information of each path according to a communication relationship among adaptors reported by a communication component.

13. The apparatus according to claim 10, wherein, the secondary refreshed sending window determining module is specifically to:
determine a congestion degree factor of each path between the sending-end adaptor and the receiving-end adaptor in the AI network according to the current congestion information; calculate a sum of a product of the congestion degree factor and a path bandwidth of each path and calculate a sum of products for all paths, to obtain a real-time total bandwidth of the AI network; adjust the initial sending window corresponding to each data flow according to the real-time total bandwidth to obtain the secondary refreshed sending window corresponding to the data flow.

14. The apparatus according to claim 13, wherein, the secondary refreshed sending window determining module is specifically to:
calculate a ratio of the real-time total bandwidth to a static bandwidth to obtain a window coefficient; calculate a product of the initial sending window corresponding to each data flow and the window coefficient to obtain the secondary refreshed sending window corresponding to the data flow.

15. A server comprising an adaptor and a machine readable storage medium having stored therein machine executable instructions that can be executed by the adaptor, wherein the machine executable instructions cause the adaptor to carry out the method of any one of claims 1-7.

16. A computer readable storage medium having stored therein a computer program, wherein the computer program, when executed by an adaptor, carries out the method of any one of claims 1-7.

Fig. 1

| determining an initial sending window corresponding to each data flow according to a credit assigned to the data flow by a receiving-end adaptor | S201 |

| sending data packets included in each data flow to the receiving-end adaptor using a packet spray manner according to the initial sending window corresponding to the data flow | S202 |

| detecting current congestion information of the AI network | S203 |

| in response to determining that the current congestion information indicates that the AI network is in a first congestion state, adjusting the initial sending window corresponding to each data flow according to the current congestion information to obtain a secondary refreshed sending window corresponding to the data flow | S204 |

| sending the data packets included in each data flow to the receiving-end adaptor using the packet spray manner according to the secondary refreshed sending window corresponding to the data flow | S205 |

Fig. 2

| | |
|---|---|
| determining an initial sending window corresponding to each data flow according to a credit assigned to the data flow by a receiving-end adaptor | S301 |
| sending data packets included in each data flow to the receiving-end adaptor using a packet spray manner according to the initial sending window corresponding to the data flow | S302 |
| detecting current congestion information of the AI network | S303 |
| in response to determining that the current congestion information indicates that the AI network is in a first congestion state, adjusting the initial sending window corresponding to each data flow according to the current congestion information to obtain a secondary refreshed sending window corresponding to the data flow | S304 |
| sending the data packets included in each data flow to the receiving-end adaptor using the packet spray manner according to the secondary refreshed sending window corresponding to the data flow | S305 |
| in response to determining that the current congestion information indicates that the AI network is in a second congestion state, adjusting the initial sending window corresponding to each data flow according to a congestion signal sent by the receiving-end adaptor to obtain a tertiary refreshed sending window corresponding to the data flow | S306 |
| sending the data packets included in each data flow to the receiving-end adaptor using the packet spray manner according to the tertiary refreshed sending window corresponding to the data flow | S307 |

Fig. 3

**degree of congestion control**

ECN-based congestion control

Detection-based congestion control

No congestion

**congestion degree**

Fig. 4

Fig. 5

Fig. 6

congestion degree factor

$[a_1,a_2,\cdots,a_N]$

path bandwidth

$[BW_1,BW_2,\cdots,BW_N]$

$\otimes$

real-time total bandwidth

round-trip time of the path

$[RTT_1,RTT_2,\cdots,RTT_N]$

$\oslash$

average round-trip time

empirical coefficient P

$>$

real-time total window size

window coefficient X

$Credit\_Wind_1 \times X$

$Credit\_Wind_2 \times X$

$Credit\_Wind_3 \times X$

flow 1 actual window

flow 2 actual window

flow 3 actual window

window coefficient X

Fig. 7

entering sending

obtaining the current congestion information of the AI network — S801

credit mechanism — S802

INT algorithm mechanism

window coefficient X — S803 S813

a product of the window corresponding to the credit and X — S823

ECN algorithm mechanism

window coefficient Y — S804 S814

a product of the window corresponding to the credit and Y — S824

determining whether the total bandwidth of all current data flows exceeds the real-time total bandwidth — S805

sending packets

Fig. 8

20

901

902

initial sending window determining module

packet spray module

903

904

congestion information detecting module

secondary refreshed sending window determining module

Fig. 9

1001

1002

adaptor

computer readable storage medium

Fig. 10

## INTERNATIONAL SEARCH REPORT

| International application No. |
| --- |
| **PCT/CN2024/137786** |

**A.    CLASSIFICATION OF SUBJECT MATTER**

H04L47/12(2022.01)i;   H04L47/80(2022.01)i

According to International Patent Classification (IPC) or to both national classification and IPC

**B.    FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNTXT, ENTXTC, ENTXT, VEN, DWPI, 3GPP, arXiv: 拥塞, 包喷洒, 初始, 窗口, 调节, 调整, 减小, 控制, 缩小, 消减, 信任, 信任值, AI网络, 带宽, 负载均衡, congestion, control, load balance, packet spray, congestion window, CWND, RTT, credit, incast

**C.    DOCUMENTS CONSIDERED TO BE RELEVANT**

| Category* | Citation of document, with indication, where appropriate, of the relevant passages | Relevant to claim No. |
| --- | --- | --- |
| Y | LE, Yanfang et al. "STrack: A Reliable Multipath Transport for AI/ML Clusters" *arXiv.org*, 23 July 2024 (2024-07-23), abstract, and section 3 | 1-16 |
| Y | US 2023216809 A1 (HUAWEI TECHNOLOGIES CO., LTD.) 06 July 2023 (2023-07-06) description, paragraphs 0124-0157 and 0195-0203, and figures 7a-1, 7a-2, 7b-1, and 7b -2 | 1-16 |
| A | CN 102388584 A (HUAWEI TECHNOLOGIES CO., LTD.) 21 March 2012 (2012-03-21) entire document | 1-16 |
| A | CN 112054965 A (ALIBABA GROUP HOLDING LIMITED) 08 December 2020 (2020-12-08) entire document | 1-16 |
| A | CN 119030932 A (TENCENT TECHNOLOGY (SHENZHEN) CO., LTD.) 26 November 2024 (2024-11-26) entire document | 1-16 |
| A | US 2015236966 A1 (ALCATEL-LUCENT USA INC. et al.) 20 August 2015 (2015-08-20) entire document | 1-16 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 August 2025** | **11 August 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/137786**

| Patent document cited in search report | | | Publication date (day/month/year) | Patent family member(s) | | | Publication date (day/month/year) |
|---|---|---|---|---|---|---|---|
| US | 2023216809 | A1 | 06 July 2023 | EP | 4203396 | A1 | 28 June 2023 |
| | | | | WO | 2022057462 | A1 | 24 March 2022 |
| | | | | CN | 114285803 | A | 05 April 2022 |
| CN | 102388584 | A | 21 March 2012 | WO | 2012149762 | A1 | 08 November 2012 |
| CN | 112054965 | A | 08 December 2020 | WO | 2020244448 | A1 | 10 December 2020 |
| CN | 119030932 | A | 26 November 2024 | None | | | |
| US | 2015236966 | A1 | 20 August 2015 | None | | | |

Form PCT/ISA/210 (patent family annex) (July 2022)